# EUROPEAN PATENT SPECIFICATION

(11) **EP 2 787 789 B1**
(45) Date of publication and mention of the grant of the patent: **14.09.2016**
(21) Application number: 13290077.0
(22) Date of filing: 03.04.2013
(51) Int. Cl.: H04W 84/22, H04W 4/00

(54) **Method of determining communication channels**
Verfahren zur Bestimmung von Kommunikationskanälen
Procédé de détermination de canaux de communication

(43) Date of publication of application: 08.10.2014
(73) Proprietor: ALCATEL LUCENT, 92100 Boulogne-Billancourt (FR)
(72) Inventor: Fonseca Dos Santos, Andre, 70197 Stuttgart (DE); Doetsch, Uwe, 74392 Freudental (DE)
(74) Representative: Wetzel, Emmanuelle

(56) References cited:
- EP-A1- 1 605 718
- EP-A1- 2 557 892
- US-A1- 2013 070 636
- US-B1- 8 254 336
- US-B1- 8 279 810

## Description

### Technical Field

The disclosure relates to telecommunication systems, and more particularly to a method for determining communication channels.

### Background

The paradigm "Internet of Things" brings a new perspective, where machines/devices with wide-area applications have to be connected to a cellular system due to its coverage properties. Indeed, it is predicted that a factor of 10X to 100 X machines/device per users will be deployed up to 2020. One instance for such wide-area and outdoor deployment of devices/machines are devices for smart city management. Such devices may be incorporated into cellular systems.

Prior art is disclosed in document US 2013/0070636 A1 and in document EP 1605 718 A1.

### Summary

Various embodiments provide for an improved method in a cellular system, an improved computer program product, an improved measurement controller and improved device as described by the subject matter of the independent claims. Advantageous embodiments are described in the dependent claims.

The term "network element" as used herein refers to a device operable to exchange information in a network environment and configured to communicate traffic, such as packet traffic, using the communication network.

Some embodiments provide a method in a cellular system, wherein the cellular system comprises a plurality of devices, wherein a device of the devices is configured to operate in a master or slave mode, wherein in the master mode the device is operable to transmit data more frequent than in the slave mode; the method comprises in a network element of the cellular system: determining a predefined communication channel for communicating control data to the device, wherein the communication channel is associated with the master or slave mode in which the device is operating, wherein the communication channel associated with the master mode is a master communication channel and the communication channel associated with the slave mode is a slave communication channel; and communicating the control data to the device via the determined communication channel.

The master mode as used herein may be a mode in which the master device transmits data more frequently than a device that operates in slave mode. The device may be a device that may perform a machine type communication application.

These features may be advantageous as they may provide a hierarchy between the devices based on their data transmission properties. This may allow for an efficient management of these devices by separately controlling the devices depending on their transmission capabilities using the predefined control communication channels. For example, an efficient resource sharing may be achieved for saving energy of the devices.

According to one embodiment, the method further comprises receiving information indicative of the plurality of devices, the information comprising dependency values between measurements performed by the devices, wherein the dependency values are higher than a predetermined threshold value; determining for each device of the devices using the received information one of the master and slave mode as an operation mode.

For example, the devices may be spatially close to each other and may perform the same measurements, wherein the measurement results of the devices may be similar in a given time interval. The time interval may be a future time interval. The measurements may be predicted measurements estimated by the network element using previous measurements performed by the devices. Alternatively, the measurements may comprise measured data by the devices during previous time intervals corresponding with the time interval. The operation modes may then be determined such that the devices may operate in one of the master or slave mode during said time interval.

This embodiment may be advantageous, as it may provide an accurate method for classifying the devices into master and slave devices operating in master and slave modes respectively, which may then lead to an efficient resource sharing between those classified devices.

According to one embodiment, the device is a master device when operating in the master mode, wherein the device is a slave device when operating in the slave mode, wherein the master communication channel is periodically established at first time periods between the network element and the master device, wherein the slave communication channel is periodically established at second time periods between the network element and the slave device.

For example, the master and slave communication channels may be broadcasted during the first and second time periods respectively. The first and second time periods may be at least partially overlapping. The first and second time periods may have a duration within the range 0.5 - 0.9 s; however other interval lengths both shorter and longer are possible. The first time periods and second time periods may have a repetition period of one hour with respect to a reference time point.

This may be advantageous as it may facilitate the control of the two communication channels and their associated resources.

According to one embodiment, the method further comprises determining a common communication channel commonly associated with the master and slave mode, wherein the common communication channel is a unidirectional channel established between the network element and the device, communicating data indicative of the determined operation mode and the first and second time periods to the device via the common communication channel.

The common communication channel may also be associated with third time periods that may not be overlapping with the first and second time periods. For example, it may only be used after or before master and slave communication channels are used.

This embodiment may be advantageous as it may save resources that would be otherwise used when the data (i.e. determined operation mode and the first and second time periods) are separately communicated to the master and slave devices.

According to one embodiment, the device is a master device operating in the master mode, wherein the method further comprises receiving from the master device information indicative of an energy consumption value of said master device, in response to a determination that the energy consumption value is higher than a predetermined maximum energy consumption value, selecting a device of the devices operating as a slave device in the slave mode, sending control data to the master device and the selected slave device via the master and slave communication channel respectively, for changing the operation mode of the master and slave device to the master and slave mode respectively.

The selection may be randomly performed. Alternatively, the selected slave device may be the spatially closest slave device to the master device. This may be advantageous as it may extend the battery life time of the devices.

According to one embodiment, the device is a master device operating in the master mode, wherein the communication of the control data comprises communicating via the master communication channel first control data indicative of a first frequency resource for data transmission by the master device, and second control data via the slave communication channel indicative of a second frequency resource for data transmission by a slave device of the devices operating in the slave mode, wherein the first and second frequency resources share radio frequency blocks. The method further comprises receiving by the slave device measurement data transmitted by the master device intended for a station of the cellular system by capturing the transmission of the data within the shared radio blocks, wherein the measurement data is indicative of the measurement performed by the master device, determining by the slave device a dependency value between the received measurement data and measurement data of measurements performed by the slave device, sending by the slave device a request to the network element via the slave communication channel for changing the operation mode of the slave device to the master mode, in case the dependency value is below a predetermined threshold value.

For example, the dependency value may be below the predetermined threshold value in a given time interval during which the slave device is not transmitting data. The correlation between the measurements of the master and slave device may not be high enough such that the measurement of the master device during said time interval is representative of the measurement of the slave device during the same time interval. The slave device may thus change its operation mode to a master mode to become a master device.

This embodiment may be advantageous as it may satisfy quality of service requirements that may be predefined by the cellular system. It may also save resources as the slave device may use existing data communication channels to receive data.

According to one embodiment, the device is a slave device operating in the slave mode, wherein the method further comprises receiving by the slave device from the network element via the slave communication channel measurement data indicative of the measurement of a master device of the devices operating in the master mode; determining by the slave device a dependency value between the received measurement data and measurement data of a measurement performed by the slave device, sending by the slave device a request to the network element for changing the operation mode of the slave device to the master mode, in case the dependency value is below a predetermined threshold value.

According to one embodiment, the devices are adapted to perform a measurement and report measurement data of the measurement to an application server of the cellular system via the network element.

This may provide a method for seamlessly integrating devices using for example the M2M communication in cellular systems and allowing an access network such as 3GPP of the cellular system to communicate with the devices.

According to one embodiment, the network element comprises a base station of an access network of the cellular system, wherein the devices belong to the radio cell served by the base station, wherein the method is performed if the number of the devices is higher than a maximum allowed number of devices to be served by the base station.

This may increase the capacity of the cellular system that may support a higher number of devices than in the conventional systems. Such conventional system that are not designed to cope with new constraints that emerge of cheap devices with long battery life constraints, and a large amount of them to be connected to a base station (significantly more than mobile phones).

According to one embodiment, the device is a master device operating in the master mode, wherein the method further comprises determining a measurement to be performed by the master and slave device of the devices operating in the slave mode, wherein the measurement comprises a first and second part, sending to the slave device a request to perform the first part of the measurement via the slave communication channel, sending to the master device a request to perform the second part of the measurement via the master communication channel.

This may be advantageous as it may further save resources and may accelerate the measurement and transmission process.

The measurement may be for example split into a computational part which comprises any required calculation of the acquired measurements and a transmission part that takes care of transmitting the results of the computation. For example, the computation may comprise a calculation of an average temperature value over a plurality of local special areas and during different time slots. For example, the first part may be the computational part of the measurement and the second part may be the transmission of measurement data of the measurement.

According to one embodiment, the determining of the master and slave mode further comprises determining a quality of service (QoS) attribute for the network element, comparing the measurements performed by the devices with the QoS attribute value, changing, based on the comparison, the operation mode of at least part of the devices.

This may satisfy the QoS requirements in term of resource utilization limits, energy saving requirements or the like. For example, the QoS may require that the temperature measurements may be received at the application server at a predefined rate e.g. 10 (5) measurements per hour during the day (night).

According to one embodiment, a master and slave device are operable to receive data during a first and second wake-up time period, wherein the first and second wake-time periods are aligned with the first and second time periods respectively.

This may have the advantage of saving the energy without the risk of missing control data. Also, this may allow the master and slave devices to listen to other communication channels while transmitting data.

Various embodiments relate to a computer program product comprising computer executable instructions to perform the method steps of the method of any one of the preceding embodiments.

Various embodiments relate to a measurement controller in a network element of a cellular system, wherein the cellular system comprises a plurality of devices, wherein a device of the devices is configured to operate in a master or slave mode, wherein in the master mode the device is operable to transmit data more frequent than in the slave mode, the measurement controller comprising a memory for storing machine executable instructions and a processor for controlling the measurement controller, wherein execution of the machine executable instructions causes the processor to determine a predefined communication channel for communicating control data to the device, wherein the communication channel is associated with the master or slave mode in which the device is operating, wherein the communication channel associated with the master mode is a master communication channel and the communication channel associated with the slave mode is a slave communication channel; and communicate the control data to the device via the determined communication channel.

Various embodiments relate to a device of a cellular system, wherein the device is configured to operate in a master or slave mode, wherein in the master mode the device is operable to transmit data more frequent than in the slave mode, wherein the device is adapted to receive control data via a predefined communication channel which is associated with the master or slave mode.

It is understood that one or more of the aforementioned embodiments may be combined as long as the combined embodiments are not mutually exclusive.

### Brief description of the drawings

In the following embodiments of the invention are explained in greater detail, by way of example only, making reference to the drawings in which:
Fig. 1 illustrates a simplified structure of an exemplary cellular system,
Fig. 2 illustrates a further exemplary cellular system,
Fig. 3 illustrates a further exemplary cellular system,
Fig. 4 illustrates a further exemplary cellular system, and

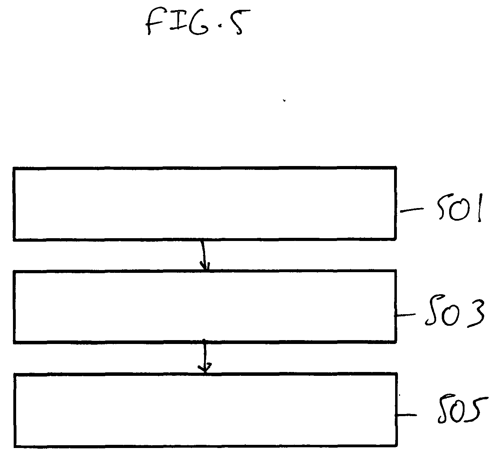

Fig. 5 shows a flowchart of a method for determining control communication channels.

### Detailed description

In the following, like numbered elements in these figures are either similar elements or perform an equivalent function. Elements which have been discussed previously will not necessarily be discussed in later figures if the function is equivalent.

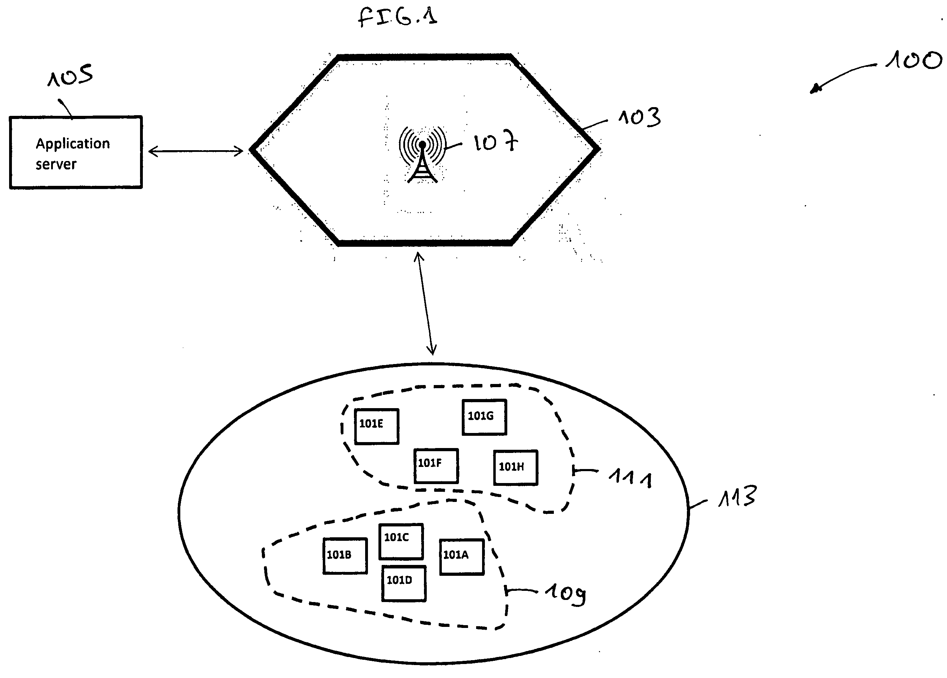

FIG. 1 illustrates a simplified structure of an exemplary cellular system 100. The system 100 comprises a plurality of devices 101A-H, an access network 103, and an application server 105 such as an M2M application server. The access network 103 may comprise a base station 107. The devices 101A-H may connect to the access network 103 through the base station 107 that serves said devices 101A-H.

The devices 101A-H comprise devices that may perform a data exchange with the access network 103 and/or other devices e.g. application server 105 without human interventions. The devices 101A-H may act automatically or on remote requests. Examples of the devices 101A-H include monitoring sensor, actuator device (e.g. switch) or any other devices that perform an M2M application.

For example, the devices 101A-H may perform temperature measurements and may transmit temperature measurements at a predetermined time intervals e.g. each 15 minutes. The temperature measurements may be correlated over time or space at neighboring devices 101A-H. The devices 101A-H may be higher than the number of devices (e.g. significantly more than mobile phones) that the base station 107 may be able to manage.

The application server 105 may connect to the access network 103 through the base station 107. The base station 107 may receive (501) information on the measurements that may be performed, for example, by the devices 101A-H. The information may be received from the application server 105 or from the devices 101A-H. The information is based on predicted measurements or on measured data by the devices 101A-H for a given time interval. The time interval may be a future time interval. A predicted measurement may be a probability distribution function pdf of the temperature in the time interval which assigns a probability to each possible value of the temperature. The information may be indicative of the correlation between measurements performed by the devices 101A-H. Based on the evaluation of this correlation, the base station 107 may decide and determine (503) an operation mode as one of a slave mode and master mode for each device of the devices 101A-H. For example, the devices 101A and 101E are performing temperature measurements which are spatially correlated as they report similar temperature predictions or measurements during the time interval. In this case, the base station 107 may decide to assign a master mode to the device 101A and a slave mode to the device 101 E. The decision of assigning or determining the modes may be randomly performed. Alternatively, the base station 107 may determine which of the devices 101A and 101 E is correlating with other devices. In case the measurements of the device 101A are correlating with both 101 F and 101 E it may be assigned a master mode and a slave mode may be assigned to both 101 F and 101 E. A device that operates in master mode may send its measurement data either at a pre-defined pace (e.g. every 15 minutes) or every time it measures an event different from a predicted one. However, a device that operates in the slave mode may transmit its measurement data in a lower pace (e.g. once in a day).

In order to communicate with the devices 101A-H, the base station 107 may determine (505) three communication channels, namely a common sensor channel (CSCH), a master sensor channel (MSCH) and a slave sensor channel (SSCH).

The MSCH may be established at first time periods between the base station 107 and master devices 101A-D, while the SSCH may be established at second time periods between the base station 107 and slave devices 101E-H. The first and second time periods may define time intervals during which the SSCH and MSCH are broadcasted.

The CSCH is associated with the master and slave mode, and may be a unidirectional (e.g. Downlink) channel established between the base station 107 and the devices 101A-H. Using this channel CSCH, the base station 107 may send to the devices 101A-H data that indicates the operation mode of each device 101A-H and the first and second time periods.

The devices 101A-D that operate in master mode are delimited by the area 109. The master devices 101A-D may listen (i.e. receive data) to the channel CSCH during a master wake-up time period in order to determine a frequency band, resolution, transmission power, etc. for their data transmission. The master wake-up time period may be a time period during which the master device 101A-D is not performing measurements and not transmitting data. In another example, the master wakeup time period may be a time period during which the master device 101A-D is not performing measurements but transmitting data. In both cases, the master wake-up time period may overlap with the first time periods. The master devices 101A-D have to awake from the master sleep mode from time to time to listen to the channel CSCH or MSCH. If for some reason, the frequencies (mode) of transmission of this channel MSCH changes, the master devices 101A-D may be informed for example via the MSCH to listen to the CSCH where the new information will be available. In alternative example, the master devices 101A-D may automatically listen to CSCH if the frequencies (mode) of transmission of this channel MSCH changes.

The devices 101 E-H that operate in slave mode are delimited by the area 111. The devices 101 E-H may listen to the channel SSCH during a slave wake-up time period in order to determine a frequency band, resolution, transmission power, etc for their data transmission. As for the master devices 101A-D, the slave devices 101 EH have to awake from the slave sleep modes from time to time to listen to the SSCH channel. If the frequencies (mode) of transmission of this channel SSCH changes, the slave devices 101 E-H may be informed, e.g. via the SSCH to listen to the CSCH where the new information will be available. Alternatively, the slave devices 101 E-H may automatically listen to CSCH if the frequencies (mode) of transmission of this channel SSCH changes.

The slave wake-up time period may be defined similarly as the master wake-up time period. The slave sleep time period may be longer than the master sleep time period.

These control channels may be predefined for 5G or LTE systems. In case of LTE, the control channels may be further defined using information regarding the resources and mode of transmission that are specific for LTE.

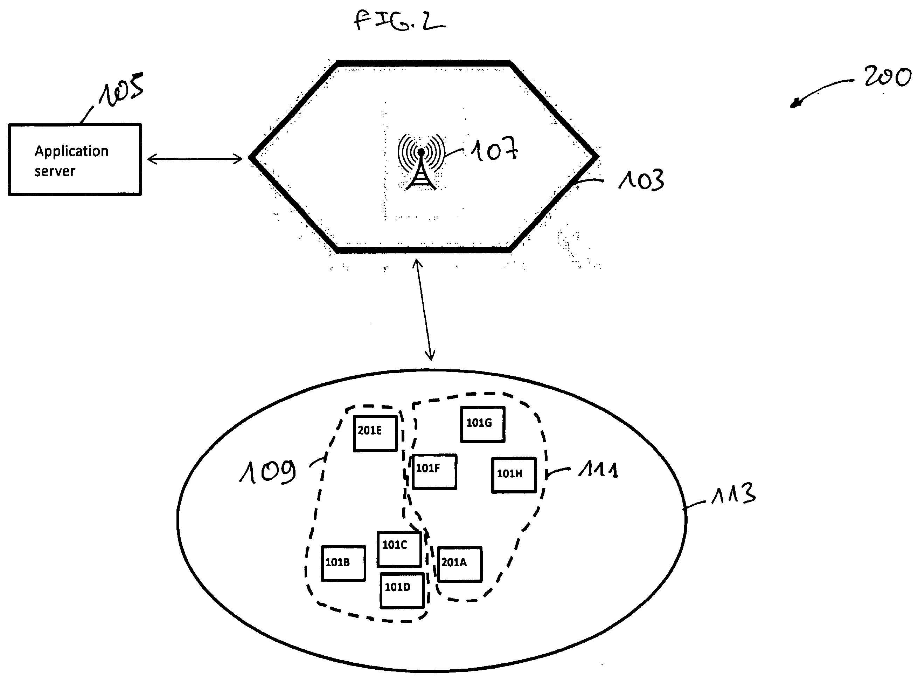

Fig. 2 shows a further exemplary cellular system 200. The cellular system 200 is similar to the cellular system 100. In addition, the master device 101A of cellular system 100 switches its operation mode to a slave mode to become a slave device 201 A and slave device 101E switches its operation mode to the master mode to become a master device 201 E. This is because, the devices 101A-H may exchange their operation modes from time to time (e.g. on a day-basis pace) for battery life saving of every device.

For that end, the base station 107 may request and receive from the master device 101A information indicative of an energy consumption value of the master device 101A. The base station 107 may then compare the energy consumption value with an energy consumption threshold which may be a maximum energy to be consumed by each device 101A-H. In response to a determination that the energy consumption value is higher than the energy consumption threshold, the base station 107 may select the slave device 101 E. The selection may be randomly performed. Alternatively, the base station may rank the slave devices 101 E-H using their associated energy consumption values, and select the slave device with the lowest energy consumption e.g. 101 E. Alternatively, the base station 107 may select more than one slave device e.g. 101 E and 101 G in case the energy consumption value of the master device exceeds the energy consumption to be consumed by two slave devices. Next, the base station 107 sends control data to the master device 101A and the selected slave device 101 E for exchanging the operation mode of the master and slave device. The device 101A may be requested to change the operation mode (i.e. switch to the slave mode) via the MSCH or via the CSCH. In the latter case, it may be first informed via MSCH to listen to the channel CSCH. Similarly, the device 101 E may be requested to change the operation mode (i.e. switch to the master mode) via the SSCH or via the CSCH, wherein in the latter case, it may be first informed via SSCH to listen to the channel CSCH.

For further energy saving, the base station 107 may share a measurement between the master and slave devices 101A-H. For example, the base station 107 may request that the slave device e.g. 101 F performs a first part of the measurement and a second part may be performed by the master device e.g. 101 B.

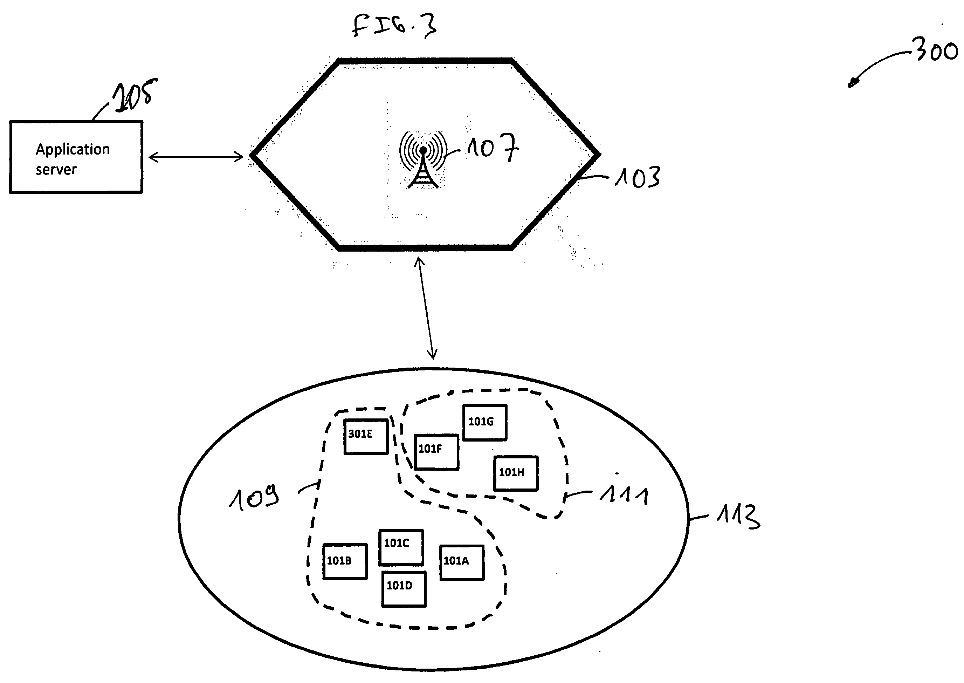

Fig. 3 shows a further exemplary cellular system 300. The cellular system 300 is similar to the cellular system 100. In addition, the number of master devices is increased. Device 101 E becomes a master device 301 E.

For example, the base station 107 determines a quality of service (QoS) requirement for the base station 107. The QoS may require that the temperature measurements may be received at the application server 105 at a predefined rate e.g. 10 (5) measurements per hour during the day (night).

Using received data from the devices 101A-H, the base station 107 may check whether the QoS requirement is fulfilled or not. In case, the QoS requirement is not fulfilled, the base station 107 may decide to increase or decrease the number of master devices 101A-D. For example, if the received data indicate that the application server 105 receives data at a rate that is lower than the required one by the QoS requirement, the base station 107 may decide to increase the number of master devices (to increase the rate) by requesting the slave device 101 E to change its operation mode to a master mode to become the master device 301 E. However, if the application server 105 receives data at a rate that is higher than the required one, the base station may decide to decrease the number of master devices 101A-D.

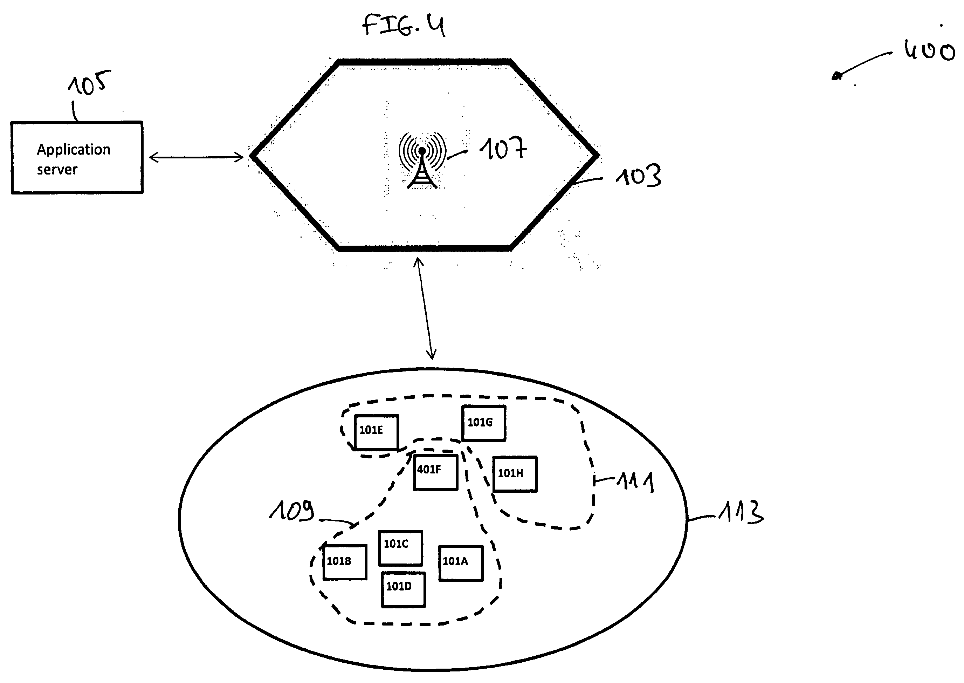

Fig. 4 shows a further exemplary cellular system 400. The cellular system 400 is similar to the cellular system 100. In addition, the devices 101A-H are able to overhear the transmissions of other devices. For example, the slave devices 101 E-H may overhear the transmission of the master devices 101A-D (only listening still requires less energy than transmitting data). This may be preferable with a TDD scheduling method.

For example, the slave devices 101 E-H are transmitting data on a first frequency resource while the master devices 101A-D are transmitting on a second frequency resource. The first and second frequency resources share radio frequency blocks. In this case, a slave device 101 F may receive measurement data transmitted by a master device 101 D intended for another station by overhearing the transmission of the data within the shared radio frequency blocks. Using the information being overheard, the slave device 101F may determine a dependency value between the received measurement data and measurement data of the measurement performed by the slave device 101F. Next, in case the dependency value is below a predetermined threshold, the slave device 101 F may send a request to the base station 107 via the SSCH for changing its operation mode master mode so as to be able to perform its own measurements that they are now less correlated to the ones of 101 D. The device 101 F may then change its operation mode to a master mode to become a master device 401 F.

However, in case the slave devices 101 E-H cannot overhear the master devices 101A-D, a broadcast channel (it can be an Extended-SSCH) may be defined via which the information of the master devices 101A-D is sent to the slave devices 101E-F.

In order to optimize this information on the master devices 101A-D, a unique representative value can be defined and broadcasted. For example, a given value is constantly broadcasted. This given value can be for example the average value of the received measurements data from every master device 101A-D. A slave device 101 E-F then learns what is the usual relation of its measured value compared to the given value according to the time instance of the day. After this learning phase, if the measured value deviates significantly to the normalized delta (difference) between the given value, then the slave device 101 E-F informs the base station 107.

This works well for applications that rely on values where a change on a specific value common to the devices 101A-H usually indicates a change in the environment. For example, if the average temperature in an area changes, the particular value of temperature measurements performed by the devices 101A-H may change as well. The way the given value is computed can be defined by the application running in the cellular system and devices themselves and can be transparent to the standard.

In the following example, the exploitation of slave devices for computational power may be described. The listening (receiving) imposes a fairly lighter burden on the devices than transmitting data. Two big sources of battery consumption for devices are then: transmission of data and computation. Computation is a burden only if the device has to perform advanced signal processing.

Therefore, slave devices may be exploited for this purpose. The idea is that the slave devices overhear (capture) the transmission of several master devices and perform pre-defined computations about the involved signals while the master device is transmitting the results of computation. The sort of computation that is done may be predefined by the application server and the device producer. The slave devices may also transmit the results of the computations to the base stations.

In this manner, the burden of the battery is shared between slave and master devices, where master devices are transmitting and slave devices are computing. This may have further advantages when a slave device is overhearing the transmission of several masters and being used for computation. If the slaves cannot overhear the master transmission, the required information for computing can be transmitted to the slave via downlink from a network element.

### List of reference numerals

- 100: cellular system
- 101: A-H devices
- 103: access network
- 105: application server
- 107: base station
- 109-111: area
- 113: radio cell
- 201-401: devices.

## Claims

1. A method in a cellular system (100), wherein the cellular system (100) comprises a plurality of devices (101), wherein a device (101A-H) of the devices is configured to operate in a master or slave mode, wherein in the master mode the device is operable to transmit data more frequent than in the slave mode to a network element (107) of the cellular system (100); the method comprising in the network element (107):
determining for the device one of the master and slave mode as an operation mode using received dependency values between measurements performed by the devices (101A-H);
determining a predefined communication channel for communicating control data to the device, wherein the communication channel is associated with the master or slave mode in which the device is operating,
- wherein the communication channel associated with the master mode is a master communication channel and the communication channel associated with the slave mode is a slave communication channel, wherein the master communication channel is periodically established at first time periods between the network element and the device operating in the master mode, wherein the slave communication channel is periodically established at second time periods between the network element (107) and the device (101 E-H) operating in the slave mode; and
- communicating the control data to the device via the determined communication channel.

2. The method according to claim 1, further comprising:
- determining a common communication channel commonly associated with the master and slave mode, wherein the common communication channel is a unidirectional channel established between the network element (107) and the device;
- communicating data indicative of the determined operation mode and the first and second time periods to the device via the common communication channel.

3. The method according to preceding claim 2, wherein the device is a master device (101E-H) operating in the master mode, the method further comprising:
- receiving from the master device (101A-H) information indicative of an energy consumption value of said master device (101A-D);
- in response to a determination that the energy consumption value is higher than a predetermined maximum energy consumption value, selecting a device of the devices operating as a slave device (101 E-H) in the slave mode;
- sending control data to the master device (101A-D) and the selected slave device (101 E-H) via the master and slave communication channel respectively, for changing the operation mode of the master and slave device to the master and slave mode respectively.

4. The method according to any of preceding claims, wherein the device is a master device (101A-D) operating in the master mode, wherein the communication of the control data comprises communicating via the master communication channel first control data indicative of a first frequency resource for data transmission by the master device (101A-D), and second control data via the slave communication channel indicative of a second frequency resource for data transmission by a slave device (101 E-H) of the devices (101A-H) operating in the slave mode, wherein the first and second frequency resources share radio frequency blocks, the method further comprising:
- receiving by the slave device (101 E-H) measurement data transmitted by the master device (101A-D) intended for a station of the cellular system (100) by capturing the transmission of the data within the shared radio frequency blocks, wherein the measurement data is indicative of the measurement performed by the master device (101A-D);
- determining by the slave device (101 E-H) a dependency value between the received measurement data and measurement data of measurements performed by the slave device;
- sending by the slave device (101 E-H) a request to the network element via the slave communication channel for changing the operation mode of the slave device (101 E-H) to the master mode, in case the dependency value is below a predetermined threshold value.

5. The method according to any of preceding claims 1-3, wherein the device is a slave device (101 E-H) operating in the slave mode, the method further comprising:
- receiving by the slave device (101E-H) from the network element via the slave communication channel measurement data indicative of the measurement of a master device of the devices operating in the master mode;
- determining by the slave device (101 E-H) a dependency value between the received measurement data and measurement data of a measurement performed by the slave device;
- sending by the slave device (101 E-H) a request to the network element for changing the operation mode of the slave device to the master mode, in case the dependency value is below a predetermined threshold value.

6. The method according to any of preceding claims, wherein the devices (101A-H) are adapted to perform a measurement and report measurement data of the measurement to an application server (105) of the cellular system (100) via the network element (107).

7. The method according to any of preceding claims, wherein the network element (107) comprises a base station (107) of an access network (103) of the cellular system (100), wherein the devices (101A-H) belong to the radio cell (113) served by the base station (107), wherein the method is performed if the number of the devices is higher than a maximum allowed number of devices to be served by the base station.

8. The method according to any of preceding claims, wherein the device is a master device (101A-D) operating in the master mode, the method further comprising:
- determining a measurement to be performed by the master and slave device of the devices operating in the slave mode, wherein the measurement comprises a first and second part;
- sending to the slave device (101E-H) a request to perform the first part of the measurement via the slave communication channel;
- sending to the master device (101A-D) a request to perform the second part of the measurement via the master communication channel.

9. The method according to any of preceding claims 1-8, wherein the determining of the master and slave mode further comprises:
- determining a quality of service (QoS) attribute for the network element;
- comparing the measurements performed by the devices (101A-H) with the QoS attribute value;
- changing, based on the comparison, the operation mode of at least part of the devices (101A-H).

10. The method according to any of preceding claims 1-9, wherein the master (101A-D) and slave device (101 E-H) are operable to receive data during a first and second wake-up time period, wherein the first and second wake-time periods are aligned with the first and second time periods respectively.

11. A computer program product comprising computer executable instructions to perform the method steps of the method of any one of the preceding claims.

12. A measurement controller in a network element (107) of a cellular system (100), wherein the cellular system (100) comprises a plurality of devices (101), wherein a device (101A-H) of the devices is configured to operate in a master or slave mode, wherein in the master mode the device is operable to transmit data more frequent than in the slave mode to the network element (107), the measurement controller comprising a memory for storing machine executable instructions and a processor for controlling the measurement controller, wherein execution of the machine executable instructions causes the processor to:
- determine for the device one of the master and slave mode as an operation mode using received dependency values between measurements performed by the devices (101A-H);
- determine a predefined communication channel for communicating control data to the device, wherein the communication channel is associated with the master or slave mode in which the device is operating, wherein the communication channel associated with the master mode is a master communication channel and the communication channel associated with the slave mode is a slave communication channel, wherein the master communication channel is periodically established at first time periods between the network element and the device operating in the master mode, wherein the slave communication channel is periodically established at second time periods between the network element (107) and the device (101 E-H) operating in the slave mode; and
- communicate the control data to the device via the determined communication channel.

13. A device (101A-H) of a cellular system (100), wherein the device is configured to operate in a master or slave mode, wherein in the master mode the device is operable to transmit data more frequent than in the slave mode, wherein one of the master and slave mode is determined as an operation mode for the device using dependency values between measurements performed by devices (101A-H) including the device of the cellular system, wherein the device is adapted to receive control data via a predefined communication channel which is associated with the master or slave mode, wherein the communication channel associated with the master mode is a master communication channel and the communication channel associated with the slave mode is a slave communication channel, wherein the master communication channel is periodically established at first time periods between the network element and the device operating in the master mode, wherein the slave communication channel is periodically established at second time periods between the network element (107) and the device (101 E-H) operating in the slave mode.

## Patentansprüche

1. Verfahren in einem zellularen System (100), wobei das zellulare System (100) eine Vielzahl von Vorrichtungen (101) umfasst, wobei eine Vorrichtung (101A-H) von den Vorrichtungen ausgelegt ist, um in einem Master- oder Slave-Modus zu funktionieren, wobei im Master-Modus die Vorrichtung betriebsfähig ist, um Daten häufiger als im Slave-Modus an ein Netzwerkelement (107) des zellularen Systems (100) zu senden; wobei das Verfahren im Netzwerkelement (107) Folgendes umfasst:
Bestimmen von einem des Master- und Slave-Modus als Betriebsmodus für die Vorrichtung unter Verwendung empfangener Abhängigkeitswerte zwischen Messungen, die von den Vorrichtungen (101A-H) durchgeführt werden;
Bestimmen eines vorausdefinierten Kommunikationskanals zum Mitteilen von Steuerdaten an die Vorrichtung, wobei der Kommunikationskanal dem Master- oder Slave-Modus zugeordnet ist, in dem die Vorrichtung funktioniert,
- wobei der Kommunikationskanal, der dem Master-Modus zugeordnet ist, ein Master-Kommunikationskanal ist, und der Kommunikationskanal, der dem Slave-Modus zugeordnet ist, ein Slave-Kommunikationskanal ist, wobei der Master-Kommunikationskanal periodisch zu ersten Zeitspannen zwischen dem Netzwerkelement und der im Master-Modus funktionierenden Vorrichtung aufgebaut wird, wobei der Slave-Kommunikationskanal periodisch zu zweiten Zeitspannen zwischen dem Netzwerkelement (107) und der im Slave-Modus funktionierenden Vorrichtung (101 E-H) aufgebaut wird; und
- Mitteilen der Steuerdaten an die Vorrichtung über den bestimmten Kommunikationskanal.

2. Verfahren nach Anspruch 1, weiterhin umfassend:
- Bestimmen eines gemeinsamen Kommunikationskanals, der gemeinsam dem Master- und Slave-Modus zugeordnet ist, wobei der gemeinsame Kommunikationskanal ein unidirektionaler Kanal ist, der zwischen dem Netzwerkelement (107) und der Vorrichtung aufgebaut wird;
- Mitteilen von Daten, die bezeichnend sind für den bestimmten Betriebsmodus und die ersten und zweiten Zeitspannen, an die Vorrichtung über den gemeinsamen Kommunikationskanal.

3. Verfahren nach vorstehendem Anspruch 2, wobei die Vorrichtung eine Master-Vorrichtung (101E-H) ist, die im Master-Modus funktioniert, wobei das Verfahren weiterhin Folgendes umfasst:
- Empfangen, von der Master-Vorrichtung (101A-H), von Informationen, die bezeichnend sind für einen Energieverbrauchswert der besagten Master-Vorrichtung (101A-D);
- als Antwort auf eine Bestimmung, dass der Energieverbrauchswert höher ist als ein vorausbestimmter maximaler Energieverbrauchswert, Auswählen einer Vorrichtung von den Vorrichtungen, die als Slave-Vorrichtung (101E-H) im Slave-Modus funktionieren;
- Senden von Steuerdaten an die Master-Vorrichtung (101 A-D) und die ausgewählte Slave-Vorrichtung (101 E-H) jeweils über den Master- und Slave-Kommunikationskanal, um den Betriebsmodus der Master- und Slave-Vorrichtung jeweils auf Master- und Slave-Modus zu ändern.

4. Verfahren nach einem beliebigen der vorstehenden Ansprüche, wobei die Vorrichtung eine im Master-Modus funktionierende Master-Vorrichtung (101A-D) ist, wobei das Mitteilen der Steuerdaten das Mitteilen von ersten Steuerdaten über den Master-Kommunikationskanal umfasst, die bezeichnend sind für eine erste Frequenzressource für Datenübertragung durch die Master-Vorrichtung (101A-D), und von zweiten Steuerdaten über den Slave-Kommunikationskanal, die bezeichnend sind für eine zweite Frequenzressource für Datenübertragung durch eine Slave-Vorrichtung (101E-H) von den im Slave-Modus funktionierenden Vorrichtungen (101A-H), wobei die erste und zweite Frequenzressource Funkfrequenzblöcke teilen, wobei das Verfahren weiterhin Folgendes umfasst:
- Empfangen, von der Slave-Vorrichtung (101E-H), von durch die Master-Vorrichtung (101A-D) gesendeten Messdaten, die für eine Station des zellularen Systems (100) vorgesehen sind, durch Erfassen der Datenübertragung innerhalb der geteilten Funkfrequenzblöcke, wobei die Messdaten bezeichnend sind für die von der Master-Vorrichtung (101A-D) durchgeführten Messung;
- Bestimmen, durch die Slave-Vorrichtung (101E-H), eines Abhängigkeitswerts zwischen den empfangenen Messdaten und Messdaten von Messungen, die von der Slave-Vorrichtung durchgeführt werden;
- Senden, durch die Slave-Vorrichtung (101 E-H), einer Anfrage an das Netzwerkelement über den Slave-Kommunikationskanal für die Änderung des Betriebsmodus der Slave-Vorrichtung (101E-H) auf Master-Modus, falls der Abhängigkeitswert unter einem vorausbestimmten Grenzwert liegt.

5. Verfahren nach einem beliebigen der vorstehenden Ansprüche 1-3, wobei die Vorrichtung eine im Slave-Modus funktionierende Slave-Vorrichtung (101 E-H) ist, wobei das Verfahren weiterhin Folgendes umfasst:
- Empfangen, durch die Slave-Vorrichtung (101E-H), von Messdaten, die bezeichnend sind für die Messung einer Master-Vorrichtung von dem im Master-Modus funktionierenden Vorrichtungen, vom Netzwerkelement über den Slave-Kommunikationskanal;
- Bestimmen, durch die Slave-Vorrichtung (101E-H), eines Abhängigkeitswerts zwischen den empfangenen Messdaten und Messdaten einer Messung, die von der Slave-Vorrichtung durchgeführt wird;
- Senden, durch die Slave-Vorrichtung (101 E-H), einer Anfrage an das Netzwerkelement für die Änderung des Betriebsmodus der Slave-Vorrichtung auf Master-Modus, falls der Abhängigkeitswert unter einem vorausbestimmten Grenzwert liegt.

6. Verfahren nach einem beliebigen der vorstehenden Ansprüche, wobei die Vorrichtungen (101A-H) angepasst sind zum Durchführen einer Messung und Melden der Messdaten der Messung an einen Anwendungsserver (105) des zellularen Systems (100) über das Netzwerkelement (107).

7. Verfahren nach einem beliebigen der vorstehenden Ansprüche, wobei das Netzwerkelement (107) eine Basisstation (107) eines Zugangsnetzwerks (103) des zellularen Systems (100) umfasst, wobei die Vorrichtungen (101A-H) zur Funkzelle (113) gehören, die von der Basisstation (107) bedient wird, wobei das Verfahren durchgeführt wird, wenn die Anzahl der Vorrichtungen höher ist als eine maximal zugelassene Anzahl von Vorrichtungen, die von der Basisstation zu bedienen sind.

8. Verfahren nach einem beliebigen der vorstehenden Ansprüche, wobei die Vorrichtung eine im Master-Modus funktionierende Master-Vorrichtung (101A-D) ist, wobei das Verfahren weiterhin Folgendes umfasst:
- Bestimmen einer Messung, die von der Master- und Slave-Vorrichtung von den im Slave-Modus funktionierenden Vorrichtungen durchzuführen ist, wobei die Messung einen ersten und zweiten Teil umfasst;
- Senden, an die Slave-Vorrichtung (101 E-H), einer Anfrage zum Durchführen des ersten Teils der Messung über den Slave-Kommunikationskanal;
- Senden, an die Master-Vorrichtung (101 A-D), einer Anfrage zum Durchführen des zweiten Teils der Messung über den Master-Kommunikationskanal.

9. Verfahren nach einem beliebigen der vorstehenden Ansprüche 1-8, wobei das Bestimmen des Master- und Slave-Modus weiterhin Folgendes umfasst:
- Bestimmen eines Dienstgüte- (QoS) Attributs für das Netzwerkelement;
- Vergleichen der von den Vorrichtungen (101A-H) durchgeführten Messungen mit dem QoS-Attributswert;
- basierend auf diesem Vergleich, Ändern des Betriebsmodus von mindestens einem Teil der Vorrichtungen (101A-H).

10. Verfahren nach einem beliebigen der vorstehenden Ansprüche 1-9, wobei die Master- (101A-D) und Slave-Vorrichtung (101E-H) betriebsfähig sind, um Daten während einer ersten und zweiten Aufwachzeitspanne zu empfangen, wobei die erste und zweite Aufwachzeitspanne jeweils mit der ersten und zweiten Zeitspanne abgestimmt sind.

11. Computerprogrammprodukt, umfassend computerausführbare Befehle zum Durchführen der Verfahrensschritte des Verfahrens nach einem beliebigen der vorstehenden Ansprüche.

12. Messcontroller in einem Netzwerkelement (107) eines zellularen Systems (100), wobei das zellulare System (100) eine Vielzahl von Vorrichtungen (101) umfasst, wobei eine Vorrichtung (101A-H) von den Vorrichtungen ausgelegt ist, um in einem Master- oder Slave-Modus zu funktionieren, wobei im Master-Modus die Vorrichtung betriebsfähig ist, um Daten häufiger als im Slave-Modus an das Netzwerkelement (107) zu senden, wobei der Messcontroller einen Speicher zum Speichern von maschinenausführbaren Befehlen umfasst, wobei die Ausführung der maschinenausführbaren Befehle den Prozessor zu Folgendem veranlasst:
- Bestimmen von einem des Master- und Slave-Modus als Betriebsmodus für die Vorrichtung unter Verwendung empfangener Abhängigkeitswerte zwischen Messungen, die von den Vorrichtungen (101A-H) durchgeführt werden;
- Bestimmen eines vorausdefinierten Kommunikationskanals zum Mitteilen von Steuerdaten an die Vorrichtung, wobei der Kommunikationskanal dem Master- oder Slave-Modus zugeordnet ist, in dem die Vorrichtung funktioniert, wobei der Kommunikationskanal, der dem Master-Modus zugeordnet ist, ein Master-Kommunikationskanal ist, und der Kommunikationskanal, der dem Slave-Modus zugeordnet ist, ein Slave-Kommunikationskanal ist, wobei der Master-Kommunikationskanal periodisch zu ersten Zeitspannen zwischen dem Netzwerkelement und der im Master-Modus funktionierenden Vorrichtung aufgebaut wird, wobei der Slave-Kommunikationskanal periodisch zu zweiten Zeitspannen zwischen dem Netzwerkelement (107) und der im Slave-Modus funktionierenden Vorrichtung (101 E-H) aufgebaut wird; und
- Mitteilen der Steuerdaten an die Vorrichtung über den bestimmten Kommunikationskanal.

13. Vorrichtung (101A-H) eines zellularen Systems (100), wobei die Vorrichtung ausgelegt ist, um in einem Master- oder Slave-Modus zu funktionieren, wobei im Master-Modus die Vorrichtung betriebsfähig ist, um Daten häufiger als im Slave-Modus zu senden, wobei einer des Master- und Slave-Modus als Betriebsmodus für die Vorrichtung unter Verwendung von Abhängigkeitswerten zwischen Messungen bestimmt wird, die von Vorrichtungen (101A-H) umfassend die Vorrichtung des zellularen Systems durchgeführt werden, wobei die Vorrichtung angepasst ist zum Empfangen von Steuerdaten über einen vorausdefinierten Kommunikationskanal, der dem Master- oder Slave-Modus zugeordnet ist, wobei der Kommunikationskanal, der dem Master-Modus zugeordnet ist, ein Master-Kommunikationskanal ist, und der Kommunikationskanal, der dem Slave-Modus zugeordnet ist, ein Slave-Kommunikationskanal ist, wobei der Master-Kommunikationskanal periodisch zu ersten Zeitspannen zwischen dem Netzwerkelement und der im Master-Modus funktionierenden Vorrichtung aufgebaut wird, wobei der Slave-Kommunikationskanal periodisch zu zweiten Zeitspannen zwischen dem Netzwerkelement (107) und der im Slave-Modus funktionierenden Vorrichtung (101 E-H) aufgebaut wird.

## Revendications

1. Procédé dans un système cellulaire (100), dans lequel le système cellulaire (100) comprend une pluralité de dispositifs (101), dans lequel un dispositif (101A-H) parmi les dispositifs est configuré pour fonctionner en mode maître ou esclave, dans lequel dans le mode maître le dispositif permet de transmettre des données plus fréquemment qu'en mode esclave à un élément de réseau (107) du système cellulaire (100) ; le procédé comprenant les étapes suivantes dans l'élément de réseau (107) :
déterminer pour le dispositif un des modes maître et esclave comme mode de fonctionnement en utilisant des valeurs de dépendance reçues entre des mesures effectuées par les dispositifs (101A-H) ;
déterminer un canal de communication prédéfini pour communiquer des données de contrôle au dispositif, dans lequel le canal de communication est associé au mode maître ou esclave dans lequel le dispositif fonctionne,
- dans lequel le canal de communication associé au mode maître est un canal de communication maître et le canal de communication associé au mode esclave est un canal de communication esclave, dans lequel le canal de communication maître est établi périodiquement à des premières périodes de temps entre l'élément de réseau et le dispositif fonctionnant en mode maître, dans lequel le canal de communication esclave est établi périodiquement à des deuxièmes périodes de temps entre l'élément de réseau (107) et le dispositif (101E-H) fonctionnant en mode esclave ; et
- communiquer les données de contrôle au dispositif par l'intermédiaire du canal de communication déterminé.

2. Procédé selon la revendication 1, comprenant en outre les étapes suivantes :
- déterminer un canal de communication commun généralement associé aux modes maître et esclave, dans lequel le canal de communication commun est un canal unidirectionnel établi entre l'élément de réseau (107) et le dispositif ;
- communiquer des données indiquant le mode de fonctionnement déterminé et les première et deuxième périodes de temps au dispositif par l'intermédiaire du canal de communication commun.

3. Procédé selon la revendication 2 précédente, dans lequel le dispositif est un dispositif maître (101 E-H) fonctionnant en mode maître, le procédé comprenant en outre les étapes suivantes :
- recevoir à partir du dispositif maître (101A-H) des informations indiquant une valeur de consommation d'énergie dudit dispositif maître (101 A-D) ;
- en réponse à une détermination selon laquelle la valeur de consommation d'énergie est supérieure à une valeur de consommation d'énergie maximum prédéterminée, sélectionner un dispositif parmi les dispositifs fonctionnant comme un dispositif esclave (101 E-H) en mode esclave ;
- envoyer des données de contrôle au dispositif maître (101 A-D) et au dispositif esclave (101 E-H) sélectionné par l'intermédiaire des canaux de communication maître et esclave respectivement, pour faire passer le mode de fonctionnement des dispositifs maître et esclave en modes maître et esclave respectivement.

4. Procédé selon l'une quelconque des revendications précédentes, dans lequel le dispositif est un dispositif maître (101 A-D) fonctionnant en mode maître, dans lequel la communication des données de contrôle comprend la communication par l'intermédiaire du canal de communication maître de premières données de contrôle indiquant une première ressource de fréquence pour la transmission de données par le dispositif maître (101 A-D), et de deuxièmes données de contrôle par l'intermédiaire du canal de communication esclave indiquant une deuxième ressource de fréquence pour la transmission de données par un dispositif esclave (101 E-H) parmi les dispositifs (101A-H) fonctionnant en mode esclave, dans lequel les première et deuxième ressources de fréquence partagent des blocs de fréquence radio, le procédé comprenant en outre les étapes suivantes :
- recevoir au moyen du dispositif esclave (101 E-H) des données de mesure transmises par le dispositif maître (101 A-D) destinées à une station du système cellulaire (100) en capturant la transmission des données à l'intérieur des blocs de fréquence radio partagés, dans lequel les données de mesure indiquent la mesure effectuée par le dispositif maître (101 A-D) ;
- déterminer au moyen du dispositif esclave (101 E-H) une valeur de dépendance entre les données de mesure reçues et les données de mesure des mesures effectuées par le dispositif esclave ;
- envoyer au moyen du dispositif esclave (101 E-H) une demande à l'élément de réseau par l'intermédiaire du canal de communication esclave pour faire passer le mode de fonctionnement du dispositif esclave (101 E-H) en mode maître, au cas où la valeur de dépendance serait inférieure à une valeur seuil prédéterminée.

5. Procédé selon l'une quelconque des revendications 1 à 3 précédentes, dans lequel le dispositif est un dispositif esclave (101 E-H) fonctionnant en mode esclave, le procédé comprenant en outre les étapes suivantes :
- recevoir au moyen du dispositif esclave (101 E-H) à partir de l'élément réseau par l'intermédiaire du canal de communication esclave des données de mesure indiquant la mesure d'un dispositif maître parmi les dispositifs fonctionnant en mode maître ;
- déterminer au moyen du dispositif esclave (101 E-H) une valeur de dépendance entre les données de mesure reçues et les données de mesure d'une mesure effectuée par le dispositif esclave ;
- envoyer au moyen du dispositif esclave (101 E-H) une demande à l'élément de réseau pour faire passer le mode de fonctionnement du dispositif esclave en mode maître, au cas où la valeur de dépendance serait inférieure à une valeur seuil prédéterminée.

6. Procédé selon l'une quelconque des revendications précédentes, dans lequel les dispositifs (101A-H) sont adaptés pour effectuer une mesure et signaler des données de mesure de la mesure à un serveur d'application (105) du système cellulaire (100) par l'intermédiaire de l'élément de réseau (107).

7. Procédé selon l'une quelconque des revendications précédentes, dans lequel l'élément de réseau (107) comprend une station de base (107) d'un réseau d'accès (103) du système cellulaire (100), dans lequel les dispositifs (101A-H) appartiennent à la cellule radio (113) desservie par la station de base (107), le procédé étant exécuté si le nombre des dispositifs est supérieur à un nombre autorisé maximum de dispositifs devant être desservis par la station de base.

8. Procédé selon l'une quelconque des revendications précédentes, dans lequel le dispositif est un dispositif maître (101 A-D) fonctionnant en mode maître, le procédé comprenant en outre les étapes suivantes :
- déterminer une mesure devant être effectuée par les dispositifs maître et esclave parmi les dispositifs fonctionnant en mode esclave, dans lequel la mesure comprend une première et une deuxième parties ;
- envoyer au dispositif esclave (101 E-H) une demande pour exécuter la première partie de la mesure par l'intermédiaire du canal de communication esclave ;
- envoyer au dispositif maître (101A-D) une demande pour exécuter la deuxième partie de la mesure par l'intermédiaire du canal de communication maître.

9. Procédé selon l'une quelconque des revendications précédentes 1 à 8, dans lequel la détermination des modes maître et esclave comprend en outre les étapes suivantes :
- déterminer un attribut de qualité de service (QoS) pour l'élément de réseau ;
- comparer les mesures effectuées par les dispositifs (101A-H) à la valeur d'attribut de QoS ;
- changer, sur la base de la comparaison, le mode de fonctionnement d'au moins une partie des dispositifs (101A-H).

10. Procédé selon l'une quelconque des revendications précédentes 1 à 9, dans lequel le dispositif maître (101A-D) et le dispositif esclave (101 E-H) permettent de recevoir des données durant une première et une deuxième périodes de réveil, dans lequel les première et deuxième périodes de réveil sont alignées avec les première et deuxième périodes de temps respectivement.

11. Produit de programme informatique comprenant des instructions exécutables par ordinateur pour exécuter les étapes de procédé du procédé selon l'une quelconque des revendications précédentes.

12. Contrôleur de mesure dans un élément de réseau (107) d'un système cellulaire (100), dans lequel le système cellulaire (100) comprend une pluralité de dispositifs (101), dans lequel un dispositif (101A-H) parmi les dispositifs est configuré pour fonctionner en mode maître ou esclave, dans lequel en mode maître le dispositif permet de transmettre des données plus fréquemment qu'en mode esclave à l'élément de réseau (107), le contrôleur de mesure comprenant une mémoire pour stocker des instructions exécutables par une machine et un processeur pour contrôler le contrôleur de mesure, dans lequel l'exécution des instructions exécutables par une machine entraîne les actions suivantes du processeur :
- déterminer pour le dispositif un des modes maître et esclave comme mode de fonctionnement en utilisant des valeurs de dépendance reçues entre des mesures effectuées par les dispositifs (101 A-H) ;
- déterminer un canal de communication prédéfini pour communiquer des données de contrôle au dispositif, dans lequel le canal de communication est associé au mode maître ou esclave dans lequel le dispositif fonctionne, dans lequel le canal de communication associé au mode maître est un canal de communication maître et le canal de communication associé au mode esclave est un canal de communication esclave, dans lequel le canal de communication maître est établi périodiquement à des premières périodes de temps entre l'élément de réseau et le dispositif fonctionnant en mode maître, dans lequel le canal de communication esclave est établi périodiquement à des deuxièmes périodes de temps entre l'élément de réseau (107) et le dispositif (101 E-H) fonctionnant en mode esclave ; et
- communiquer les données de contrôle au dispositif par l'intermédiaire du canal de communication déterminé.

13. Dispositif (101A-H) d'un système cellulaire (100), dans lequel le dispositif est configuré pour fonctionner en mode maître ou esclave, dans lequel en mode maître le dispositif permet de transmettre des données plus fréquemment qu'en mode esclave, dans lequel un des modes maître et esclave est déterminé en tant que mode de fonctionnement pour le dispositif en utilisant des valeurs de dépendance entre des mesures effectuées par des dispositifs (101 A-H) y compris le dispositif du système cellulaire, dans lequel le dispositif est adapté pour recevoir des données de contrôle par l'intermédiaire d'un canal de communication prédéfini qui est associé au mode maître ou esclave, dans lequel le canal de communication associé au mode maître est un canal de communication maître et le canal de communication associé au mode esclave est un canal de communication esclave, dans lequel le canal de communication maître est établi périodiquement à des premières périodes de temps entre l'élément de réseau et le dispositif fonctionnant en mode maître, dans lequel le canal de communication esclave est établi périodiquement à des deuxièmes périodes de temps entre l'élément de réseau (107) et le dispositif (101E-H) fonctionnant en mode esclave.
